# EUROPÄISCHE PATENTSCHRIFT

(11) **EP 0 695 942 B1**
(45) Veröffentlichungstag und Bekanntmachung des Hinweises auf die Patenterteilung: **02.01.2003**
(21) Anmeldenummer: 95250171.6
(22) Anmeldetag: 13.07.1995
(51) Int. Cl.: G01N 35/04, B01L 9/00, B65G 47/14, G01N 1/12, G01N 33/20, B65D 83/02, C21C 5/46

(54) **Grossraum-Magazin mit Wechselcontainer**
Large capacity magazine with interchangeable container
Magasin à haute capacité avec récipient interchangeable

(30) Priorität: 01.08.1994 DE 4428838
(43) Veröffentlichungstag der Anmeldung: 07.02.1996
(73) Patentinhaber: SMS Demag AG, 40237 Düsseldorf (DE)
(72) Erfinder: Schöck, Hans Wilhelm, Dipl.-Ing., D-47239 Duisburg (DE)
(74) Vertreter: Meissner, Peter E., Dipl.-Ing.

(56) Entgegenhaltungen:
- EP-A- 0 092 636
- DE-A- 2 552 271
- US-A- 4 058 017
- US-A- 4 560 314

## Beschreibung

Die Erfindung betrifft ein Grossraum-Magazin mit Wechselcontainer für die Bereitstellung von Meß- und/oder Probenahmesonden für die Messung von Daten von Metallschmelzen, bestehend aus einer Vorrichtung zum Bevorraten und Ausgeben von Meß- und/oder Probenahmesonden in bzw. aus einem Großraum-Magazin, sowie einer Vorrichtung zur Entnahme und Zuführung der Sonden zum Lanzenkopf einer Sublanze.

Derartige Sonden dienen insbesondere zur Messung von Daten von Metallschmelzen im Konverter mittels Sublanzen, wobei eine Probennahmesonde für die jeweilige Messung am in die Metallschmelze eintauchendem Ende der Sublanze befestigbar ist.

Bekannt ist der Einsatz von Einrichtungen zum Bevorraten von Sonden mit automatischen Vereinzelungs- und Austragseinrichtungen. Diese bekannten Systeme haben eine begrenzte Aufnahmekapazität und erfordern eine in kurzen Abständen zu wiederholende Auffüllung. Hierbei sind die jeweiligen zeitlichen Abstände zum Auffüllen der Systeme von den einzelnen Prozessen, bei denen die Sonden zur Messung von Daten zur Anwendung kommen sollen, abhängig, d.h. bei vielen Prozessen sind während des Ablaufs zahlreiche Messungen notwendig, und dementsprechend muß eine große Anzahl von Sonden für die Messungen bereitgestellt werden.

Die Befüllung geschieht durch vor-Ort-Personal und macht somit dieses Verfahren personalund kostenaufwendig.

Der Erfindung liegt daher die Aufgabe zugrunde, ein System zu entwickeln, mit dem dieser Personal- und Kostenaufwand verringert sowie die Aufnahmekapazität des Systems vergrößert werden kann bei gleichzeitiger Erhöhung der Funktionstüchtigkeit.

Diese Aufgabe wird durch die Merkmale des Anspruchs 1 gelöst.
Vorteilhafte Weiterbildungen der Erfindung sind in den Unteransprüchen enthalten.

Erfindungsgemäß ist das Großraum-Magazin derart gestaltet, dass es einen stationären angeordneten Grundrahmen aufweist, der einen Bevorratungsraum aufweist, der mit Sonden vorgefüllt ist, und dass der Grundrahmen mindestens ein Nockenrad aufweist, dessen Nocken bei eingesetztem Wechselcontainer in einen sich verengenden Bereich des Bevorratungsraumes hineinreichen, wobei durch die Drehbewegung eines oder mehrerer Nockenräder im Verengungsbereich ein gleichmäßiges Einführen von einzelnen Sonden in einen Einzelkanal bewirkbar ist, die an dessen Mündung entnehmbar sind.

Die Erfindung bietet den Vorteil, dass eine große Anzahl von Sonden in einem Wechselcontainer bereitgestellt werden kann, so dass ein ständiges Nachfüllen des Behälters nicht mehr nötig ist, vielmehr wird bei Bedarf lediglich der ganze Container ausgetauscht.

Zur Vereinzelung der Sonden, die sich in dem Bevorratungsraum befinden, weist dieser einen sich verengenden Bereich auf, der an seinem Ende in einen Einzelkanal mündet, der dann nur noch eine Sonde durchläßt. Durch die Bewegung der Nocken, die in den Verengungsbereich des Bevorratungsraumes hineinragen, kommt es zu einem ständigen Umschichten der sich in dem Verengungsbereich befindenden Sonden und somit zu einer Relativbewegung der Sonden zueinander, was eine Vereinzelung der Sonden bewirkt sowie einer Verklemmung der Sonden entgegenwirkt.

Wegen der großen Anzahl an Sonden, die mehrlagig übereinander in dem Bevorratungsraum angeordnet sind, kann es nämlich erfahrungsgemäß in der Verengung zu Klemmungen aufgrund der sich einstellenden Kräftepaare zwischen den Sonden kommen. Durch eine entgegengesetzt zur abwärts wirkenden Kraft der Sonden wirkende Drehung der Nocken werden Verklemmungen der Sonden verhindert, und somit wird gewährleistet, dass stetig eine Sonde von dem Bevorratungsraum in den Führungskanal gelassen wird und dass die Bereitstellung von Sonden für die Messungen nicht unterbrochen wird.

Weiterhin bietet die Erfindung den Vorteil, unterschiedliche Sondentypen in der jeweils gewünschten Menge in Abhängigkeit von dem jeweilig durchgeführten metallurgischen Prozeß in dem Wechselcontainer bereitzustellen. Die Auffüllung des Wechselcontainers mit Sonden kann vorteilhaft an einer zentralen Stelle durchgeführt werden, und die Wechselcontainer werden dann von dieser zentralen Stelle über geeignete Transportmittel zu dem Grundrahmen befördert und mit diesem verbunden.

Als vorteilhafte Weiterentwicklung der erfindungsgemäßen Vorrichtung sind Bügel vorgesehen, die der Form der Nocken entsprechen. Sie sind dort stationär im Verengungsbereich des Wechselcontainers angeordnet, wo die Nocken des Nockenrades beim Einsetzen hineinragen. Mittels dieser Bügel kann ausgeschlossen werden, dass sich beim Befüllen des Wechselcontainers eine Sonde in diesem Bereich anordnet. Somit kann der Einsatzvorgang des Wechselcontainers in den mit Nocken versehenen Grundrahmen unproblematisch ablaufen.

Weitere Vorteile und Anwendungsmöglichkeiten sind der nachfolgenden Beschreibung und den beiliegenden Zeichnungen zu entnehmen.

Sie zeigen:
Fig. 1 eine Vorderansicht des Magazins;
Fig. 2 eine Darstellung der Schnittfläche A-A von Fig. 1;
Fig. 3 eine Darstellung des Einsetzens des Wechselcontainers in das Magazin und
Fig. 4 eine weitere Ausführungsform des Magazins bei Sublanzen-Robotern.

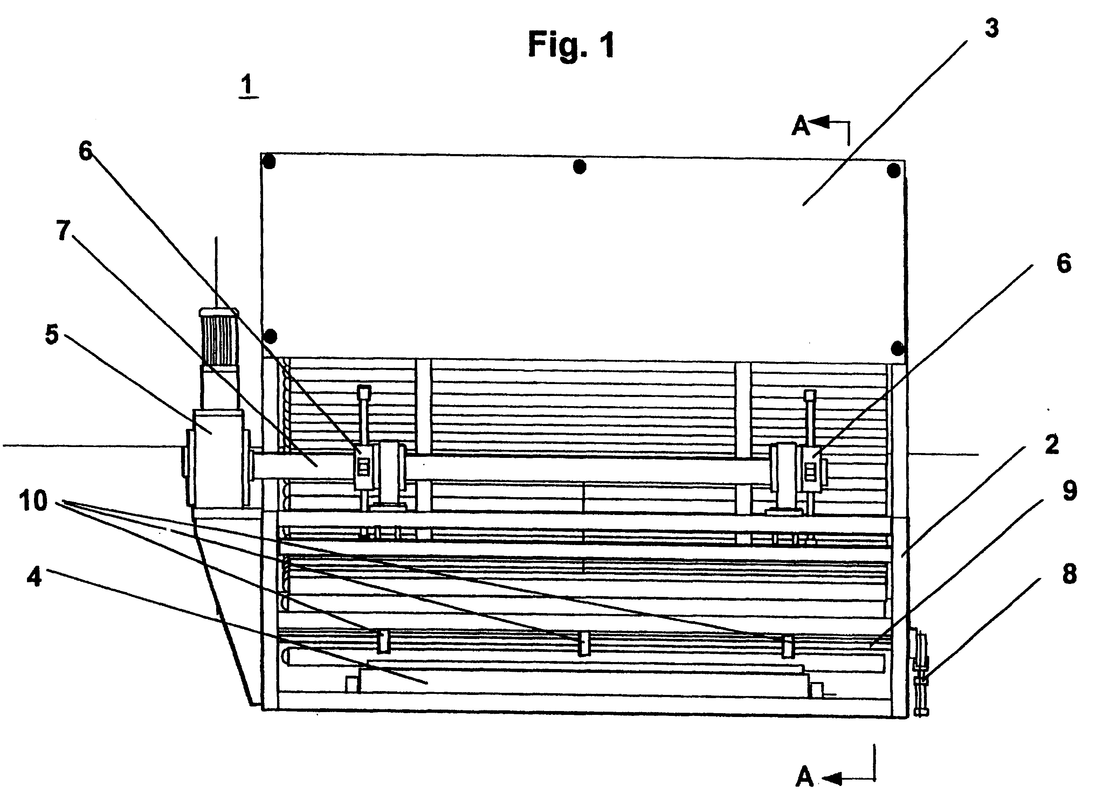

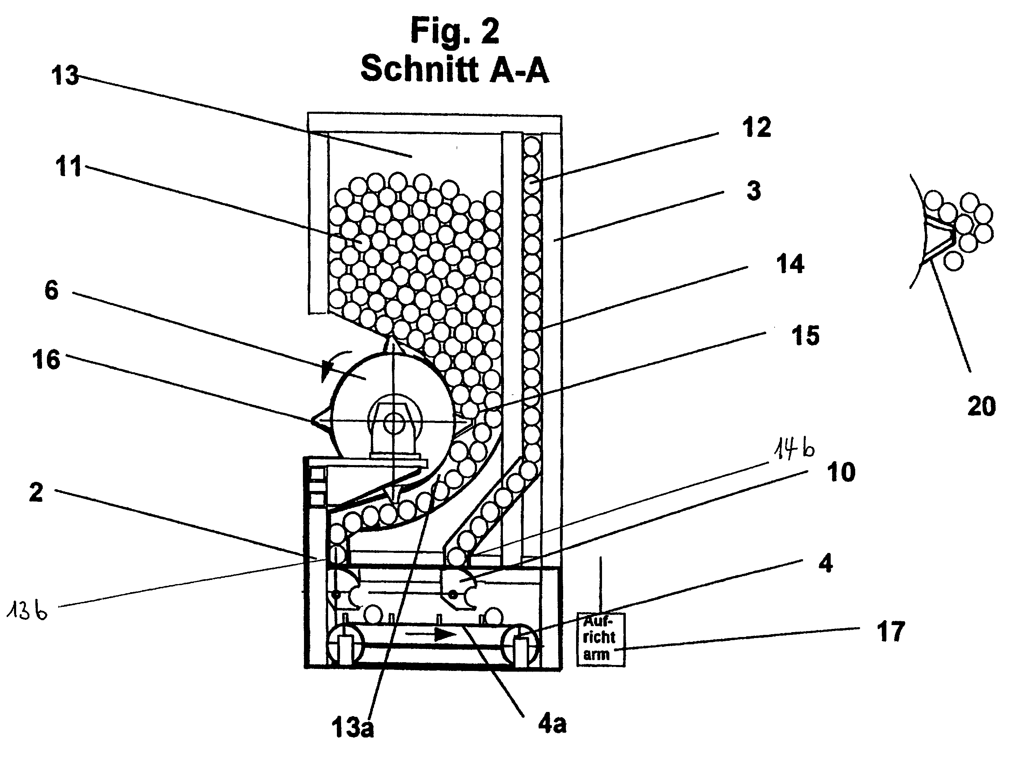

Die Figuren 1 und 2 zeigen ein Großraum-Magazin 1 mit einem mit Sonden vorgefüllten Wechselcontainer 3, eingesetzt in einen stationär angeordneten Grundrahmen 2.

Der Wechselcontainer 3 ist mit einem entsprechenden Bevorratungsraum 13 für die Aufnahme von ersten Sonden 11 versehen. Der Bevorratungsraum 13 geht über einen Verengungsbereich 15 in einen Einzelkanal 13a über. Der Einzelkanal 13a mündet bei 13b in ein Formstück 10, das im Grundrahmen 2 drehbar gelagert ist. Über das rotierende Formstück 10 werden die Sonden 11 vereinzelt und auf der Austrageinrichtung 4 des Grundrahmens abgelegt.

Die Austrageinrichtung 4 besteht aus einem Transportband 4a, das mittels Transportwellen 9 und einer Kolben-Zylindereinheit 8 bewegt wird. Die Sonden fallen auf das Transportband, werden positioniert und dann zu dem Aufrichtarm 17 transportiert, der die Verbindung mit der jeweiligen, in einer nicht dargestellten Anlage gehaltenen und ausgerichteten Sublanze erlaubt.

In den Verengungsbereich 15 des Wechselcontainers 3 ragen die Nocken 16 eines oder mehrerer Nockenräder 6. Ein Antrieb 5 dreht die Nockenräder 6 mittels einer Antriebswelle 7 entgegengesetzt zur abwärts wirkenden Kraft der Sonden in dem Bevorratungsraum. Durch diese Drehbewegung wird ein gleichmäßiges Einführen von einzelnen Sonden in den Führungskanal 13a bewirkt sowie einem möglichen Verklemmen der Sonden in der Verengung 15 entgegengewirkt.

Figur 2 zeigt weiterhin eine Teilbereichsdarstellung des Bevorratungsraumes 13 im Verengungsbereich 15. Dort, wo die Nocken 6 des Nockenrades 16 beim Zusammenfügen von Wechselcontainer 3 und Grundrahmen 2 hineinreichen, sind stationär Bügel 20 am Wechselcontainer vorgesehen, die ausschließen, daß sich bei der Befüllung des Bevorratungsraumes eine Sonde in diesem Bereich festsetzt, was das Einführen der Nocken in den Verengungsbereich 15 des Bevorratungsraumes 13 erschweren würde.

Durch das Versehen des Wechselcontainers mit einem Bevorratungsraum 13 und einem zusätzlichen Schacht 14 bzw. Schächte, die jeweils eine unterschiedliche Menge an Sonden und Sondentypen aufnehmen können, ist die erfindungsgemäße Vorrichtung an den jeweiligen Prozeß, für den Meßdaten aufgenommen werden sollen, anpaßbar.

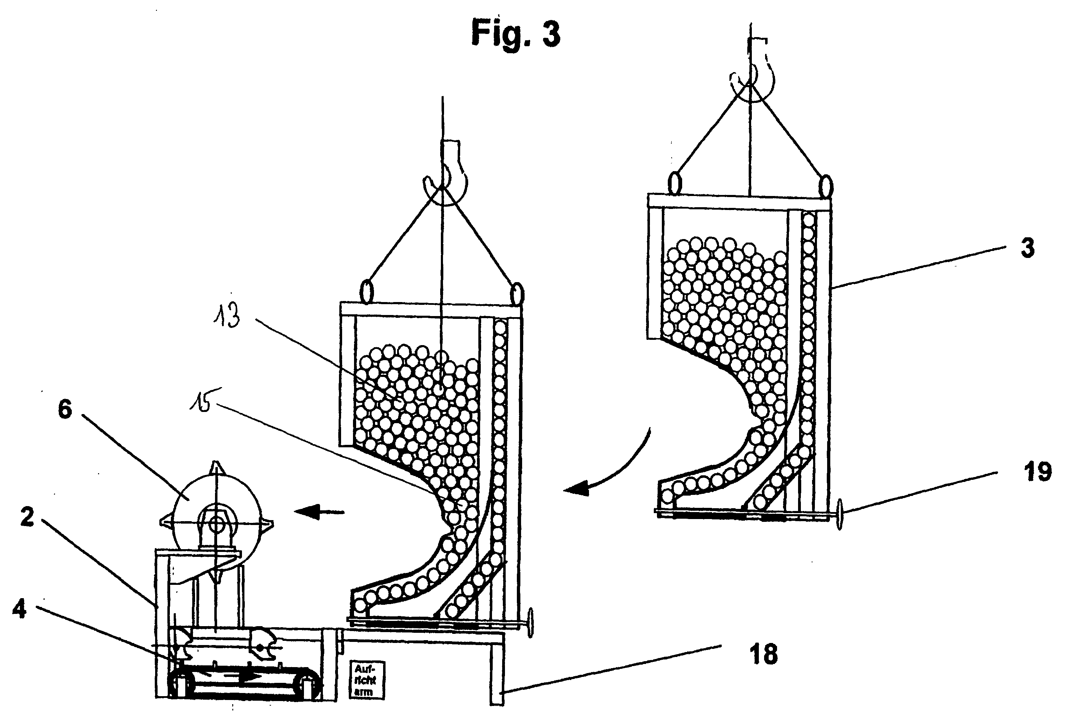

Figur 3 stellt das Einsetzen eines Wechselcontainers 3 in den stationär angeordneten Grundrahmen 2 des Großraum-Magazins 1 dar. Um ein sicheres und genaues Positionieren und Ineinanderführen der Elemente Wechselcontainer 3 und stationärer Grundrahmen zu gewährleisten, sind Führungsbahnen 18 vorgesehen, welche nach Beendigung des Einsatzvorgangs wieder entfernt werden können. Das Aufsetzen bzw. das Einsetzen des Wechselcontainers 3 auf bzw. in den Grundrahmen 2 kann mittels Lasthebeeinrichtungen und/oder Flurförderzeugen auf vorteilhafte Weise geschehen. Figur 3 zeigt eine Möglichkeit des Transportes des Wechselcontainers 2 mittels einer bekannten Lasthebeeinrichtung. Um ein Herausfallen von Sonden 11, 12 beim Transport, beispielsweise durch Schwankungen, zu verhindern, ist vorgesehen, die Sonden durch Transportsicherungen 19 zu sichern.

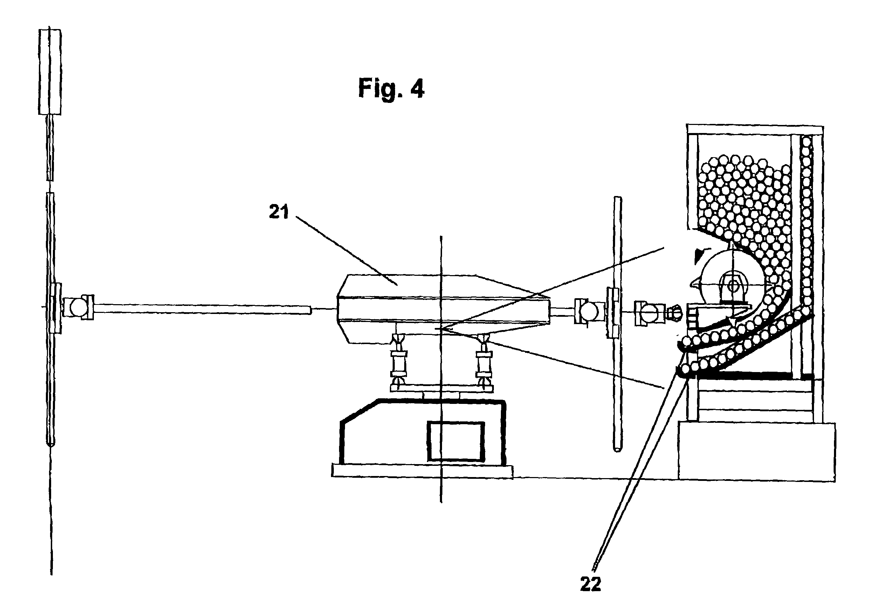

In Figur 4 ist der Einsatz einer zweiten Ausführungsform der erfindungsgemäßen Vorrichtung in Kombination mit Sublanzen-Robotern 21 dargestellt. Die Einzelkanäle 13a und 14a sind an ihren Mündungen 22 entsprechend für die Aufnahme der Sonden durch den Roboter angepaßt.

## Patentansprüche

1. Grossraum-Magazin mit Wechselcontainer für die Bereitstellung von Meß- undloder Probenahmesonden für die Messung von Daten von Metallschmelzen, bestehend aus einer Vorrichtung zum Bevorraten und Ausgeben von Meß- und/oder Probenahmesonden (11) in bzw. aus dem Großraum-Magazin (1), sowie einer Vorrichtung zur Entnahme und Zuführung der Sonden zum Lanzenkopf einer Sublanze,
**dadurch gekennzeichnet,**
**dass** das Großraum-Magazin (1) einen stationär angeordneten Grundrahmen (2) aufweist, in den der Wechselcontainer (3) einsetzbar ist, der einen Bevorratungsraum (13) aufweist, der mit Sonden (11) vorgefüllt ist, und dass der Grundrahmen (2) mindestens ein Nockenrad (6) aufweist, dessen Nocken (16) bei eingesetztem Wechselcontainer in einen sich verengenden Bereich (15) des Bevorratungsraumes (13) hineinreichen, wobei durch die Drehbewegung eines oder mehrerer Nockenräder (6) im Verengungsbereich (15) ein gleichmäßiges Einführen von einzelnen Sonden in einen Einzelkanal (13a) bewirkbar ist, die an dessen Mündung (13b) entnehmbar sind.

2. Grossraum-Magazin gemäß Anspruch 1,
**dadurch gekennzeichnet,**
**dass** in dem Wechselcontainer (3) weiterhin mindestens ein Schacht (14) vorgesehen ist, der mit zweiten Sonden (12) vorgefüllt ist, wobei die Sonden an dessen Mündung (14b) entnehmbar sind.

3. Grossraum-Magazin gemäß Anspruch 1 und 2,
**dadurch gekennzeichnet,**
**dass** an der Mündung der Einzelkanäle (13b, 14b) eine die Sonden aufnehmende Austrageinrichtung (4) vorgesehen ist, die aus einem Transportband (4a) zur Aufnahme der Sonden besteht, das mittels Transportwellen (9) und einer Kolben-Zylindereinheit (8) bewegbar ist.

4. Grossraum-Magazin gemäß Anspruch 3,
**dadurch gekennzeichnet,**
**dass** im Bereich der Mündungen der Einzelkanäle (13b, 14b) am Grundrahmen drehbare Formstücke (10) zur einzelnen Aufnahme von Sonden und Abgabe dieser auf das Transportband (4a) vorgesehen sind.

5. Grossraum-Magazin gemäß Anspruch 1,
**dadurch gekennzeichnet,**
**dass** Bügel (20), die der Form der Nocken entsprechen, stationär im Verengungsbereich (1 5) des Wechselcontainers (3) dort angeordnet sind, wo die Nocken (16) des Nockenrades (6,) beim Einsetzen hineinragen.

6. Grossraum-Magazin gemäß Anspruch 1 und 2,
**dadurch gekennzeichnet,**
**dass** der Bevorratungsraum (13) und die Schächte (14) für unterschiedliche Sondentypen und variierende Sondenmengen eines Typs auslegt sind.

7. Grossraum-Magazin gemäß Anspruch 1 und 3,
**dadurch gekennzeichnet,**
**dass** dem Großraum-Magazin (1) ein Aufrichtarm (17) zugeordnet ist, mit dessen Hilfe ein Positionieren der Sonden und Verbinden mit der jeweiligen Sublanze möglich ist.

8. Grossraum-Magazin gemäß Anspruch 1,
**dadurch gekennzeichnet,**
**dass** das Großraum-Magazin (1) an Anlagen mit Sublanzen-Robotern (21) einsetzbar ist, wobei die Einzelkanäle (1 3a, 14a) entsprechend für die Aufnahme der Sonden (1 1, 12) durch den Roboter (21) angepaßt sind.

9. Grossraum-Magazin nach einem der vorhergehenden Ansprüche,
**dadurch gekennzeichnet,**
**dass** der Wechselcontainer (2) transportabel ist und geeignet für eine externe Befüllung mit Sonden ist.

10. Grossraum-Magazin nach Anspruch 9,
**dadurch gekennzeichnet,**
**dass** die Sonden im Wechselcontainer (2) für den Transport durch eine Transportsicherung (19) gegen Herausfallen sicherbar sind.

## Claims

1. Large-capacity magazine with interchangeable container for providing measuring and/or sampling probes for measuring the data of molten metals, consisting of a device for supplying and issuing measuring and/or sampling probes (11) into or from the large-capacity magazine (1), and of a device for removing and feeding the probes to the lance head of a sub-lance, **characterised in that** the large-capacity magazine (1) has a stationarily disposed base frame (2), into which the interchangeable container (3) is insertable, the container having a storage chamber (13) filled with probes (11), and **in that** the base frame (2) has at least one camwheel (6), whose cams (16) extend into a tapering region (15) of the storage chamber (13) when the interchangeable container is in the inserted state, in which case by rotary motion of one or more camwheels (6) in the tapering region (15) a homogeneous insertion of individual probes into a individual channel (13a) is realisable, the probes being removable at its mouth (13b).

2. Large-capacity magazine according to claim 1, **characterised in that** in the interchangeable container (3) furthermore at least one shaft (14) is provided, which is pre-filled with second probes (12), the probes being removable at its mouth (14b).

3. Large-capacity magazine according to claim 1 and 2, **characterised in that** at the mouth of the individual channels (13b, 14b) a removal device (4) receiving the probes is provided, which consists of a conveyor belt (4a) for receiving the probes, which is movable by means of conveying shafts (9) and a piston-cylinder unit (8).

4. Large-capacity magazine according to claim 3, **characterised in that** in the region of the mouths of the individual channels (13b, 14b), moulded parts (10) are provided, which are rotatable on the base frame and are intended to receive probes individually and deposit the same on to the conveyor belt (4a).

5. Large-capacity magazine according to claim 1, **characterised in that** hoops (20) corresponding to the shape of the cams are disposed stationarily in the tapering region (15) of the interchangeable container (3) where the cams (16) of the camwheel (6) project during insertion.

6. Large-capacity magazine according to claim 1 and 2, **characterised in that** the storage chamber (13) and the shafts (14) are adapted for different types of probe and varying quantities of one type of probe.

7. Large-capacity magazine according to claim 1 and 3, **characterised in that** a mounting arm (17) is allocated to the large-capacity magazine (1), by means of which arm positioning of the probes and connection to the respective sub-lance is possible.

8. Large-capacity magazine according to claim 1, **characterised in that** the large-capacity magazine (1) is usable in apparatus having sub-lance robots (21), the individual channels (13a, 14a) being accordingly adapted by the robots (21) in order to receive the probes (11, 12).

9. Large-capacity magazine according to one of the preceding claims, **characterised in that** the interchangeable container (2) is transportable and is suitable for external filling with probes.

10. Large-capacity magazine according to claim 9, **characterised in that** the probes in the interchangeable container (2) can be prevented from falling out by a transport catch (19) in the case of transport.

## Revendications

1. Magasin à grande capacité à conteneur interchangeable pour la mise à disposition de sondes de mesure et/ou de prise d'échantillons pour la mesure de données de bains de fusion métalliques, constitué d'un dispositif pour stocker et sortir des sondes de mesure et/ou de prise d'échantillons (11) dans ou hors du magasin à grande capacité (1), ainsi que d'un dispositif pour évacuer et amener les sondes vers la tête d'une lance auxiliaire,
**caractérisé en ce que** le magasin à grande capacité (1) présente un bâti de base (2) agencé de façon fixe, dans lequel le conteneur interchangeable (3) peut être mis en place, qui présente un espace de stockage (13), qui est rempli de sondes (11), et **en ce que** le bâti de base (2) présente au moins une roue à ergots (6), dont les ergots (16), lorsque le conteneur interchangeable est mis en place, pénètrent dans une zone (15) se rétrécissant de l'espace de stockage (13), une introduction uniforme de sondes individuelles dans un canal individuel (13a) pouvant être obtenue par le mouvement rotatif d'une ou plusieurs roues à ergots (6) dans la zone se rétrécissant (15). sondes qui peuvent être retirées à son embouchure (13b).

2. Magasin à grande capacité selon la revendication 1,
**caractérisé en ce que**, dans le conteneur interchangeable (3), il est prévu en outre au moins une cuve (14) qui est remplie de secondes sondes (12), les sondes pouvant être retirées à son embouchure (14b).

3. Magasin à grande capacité selon les revendications 1 et 2,
**caractérisé en ce que**, à l'embouchure des canaux individuels (13b, 14b), il est prévu un dispositif d'évacuation (4) recevant les sondes, qui est constitué d'une bande de transport (4a) pour recevoir les sondes, qui est déplaçable au moyen d'arbres de transport (9) et d'un vérin (8).

4. Magasin à grande capacité selon la revendication 3,
**caractérisé en ce que**, dans la zone des embouchures des canaux individuels (13b, 14b), des pièces moulées (10) pouvant tourner sur le bâti de base sont prévues pour la réception individuelle de sondes et l'évacuation de celles-ci sur la bande de transport (4a).

5. Magasin à grande capacité selon la revendication 1,
**caractérisé en ce que** des étriers (20), qui correspondent à la forme des ergots, sont agencés de façon fixe dans la zone rétrécie (15) du conteneur interchangeable (3), là où les ergots (16) de la roue à ergots (6) pénètrent lors de la mise en place.

6. Magasin à grande capacité selon les revendications 1 et 2,
**caractérisé en ce que** l'espace de stockage (13) et les cuves (14) sont prévus pour différents types de sondes et des quantités variables de sondes d'un type.

7. Magasin à grande capacité selon les revendications 1 et 3,
**caractérisé en ce que**, au magasin à grande capacité (1), il est associé un bras de levage (17), à l'aide duquel un positionnement des sondes et une liaison avec la lance auxiliaire respective sont possibles.

8. Magasin à grande capacité selon la revendication 1,
**caractérisé en ce que** le magasin à grande capacité (1) peut être monté sur des installations ayant des robots (21) à lances auxiliaires, les canaux individuels (13a, 14a) étant adaptés de façon correspondante pour la réception des sondes (11. 12) par les robots (21).

9. Magasin à grande capacité selon une des revendications précédentes,
**caractérisé en ce que** le conteneur interchangeable (2) est transportable et est approprié pour un remplissage externe par des sondes.

10. Magasin à grande capacité selon la revendication 9,
**caractérisé en ce que** les sondes dans le conteneur interchangeable (2) pouvant être protégées contre une chute pour le transport par une sécurité de transport (19).
